# EUROPÄISCHE PATENTANMELDUNG

(11) **EP 1 642 664 A1**
(43) Veröffentlichungstag der Anmeldung: **05.04.2006**
(21) Anmeldenummer: 05108930.8
(22) Anmeldetag: 27.09.2005
(51) Int. Cl.: B23G 5/06

(54) **Gewindeschneidwerkzeug**

(30) Priorität: 29.09.2004 DE 102004047839
(71) Anmelder: Sandvik Intellectual Property HB, 811 81 Sandviken (SE)
(72) Erfinder: GIEßLER, Josef, 77796, Mühlenbach (DE); SCHWARZ, Friedrich, 77963, Schwanau (DE); HEILER, Roland, 64668, Rimbach (DE)
(74) Vertreter: Weber, Dieter

(57) **Zusammenfassung**

Die vorliegende Erfindung betrifft ein Gewindeschneidwerkzeug mit einem Schaft und einem Schneidteil, wobei das Schneidteil mehrere Schneidstollen (3) mit dazwischenliegenden Spannuten aufweist und wobei die Schneidstollen (3) einen vorderen, verjüngt zulaufenden Anschnittbereich (3a) und einen daran anschließenden Führungsteil aufweisen. Um ein Gewindeschneidwerkzeug mit den eingangs genannten Merkmalen zu schaffen, welches einem geringeren Verschleiß unterliegt und weniger häufig nachgeschliffen werden muß als herkömmliche Gewindeschneidwerkzeuge der vorstehend beschriebenen Art, wird erfindungsgemäß vorgeschlagen, daß die Schneidzähne (5) im Anschnittbereich an ihren Ecken eine Fase (6) oder Abrundung (7) aufweisen.

## Beschreibung

Die vorliegende Erfindung betrifft ein Gewindeschneidwerkzeug mit einem Schaft und einem Schneidteil, wobei das Schneidteil mehrere Schneidstollen mit dazwischenliegenden Spannuten aufweist und die Schneidstollen jeweils einen Führungsabschnitt und einen Anschnittbereich aufweisen. Typischerweise haben entsprechende Gewindeschneidwerkzeuge drei bis vier Schneidstollen, die durch die gleiche Anzahl dazwischenliegender Spannuten voneinander getrennt sind. Der vordere Abschnitt des Gewindeschneiders ist verjüngt zulaufend ausgebildet, d.h. die Höhe der Schneidzähne nimmt zur Spitze hin immer weiter ab. Im Führungsteil haben alle Zähne das gleiche Profil, welches exakt dem gewünschten Gewindeprofil entspricht. Es versteht sich, daß die Zähne benachbarter Stollen entsprechend der Gewindesteigung etwas zueinander versetzt sind und daß auch die einzelnen Zähne, soweit sie sich über die Breite eines Schneidstollens in Umfangsrichtung erstrekken, der Gewindesteigung folgen.

Die Schneidstollen können dabei entweder im wesentlichen achsparallel ausgerichtet sein oder, ähnlich wie bei einem Bohrer, einen Drallwinkel aufweisen. In einem die Achse enthaltenden Schnitt durch einen Schneidstollen bzw. durch die einzelnen Zähne eines Schneidstollens haben diese im wesentlichen ein Trapezprofil, wobei die Zähne im Anschnittbereich von dieser Trapezform abweichen können, da die Zahnhöhe von der Spitze des Gewindeschneidwerkzeugs her zum Führungsteil kontinuierlich zunimmt, so daß die einhüllende Oberfläche der Zahndächer bzw. Zahnaußenflächen im Anschnittbereich in etwa einem Konus oder Ellipsoid entspricht und somit im Anschnittbereich auch die Höhe jedes einzelnen Zahns in axialer Richtung von der Spitze in Richtung des Führungsteils zunimmt. Im axialen Längsschnitt durch einen solchen Zahn im Anschnittbereich ergibt sich daher eine leichte Abweichung von dem sonstigen Trapezprofil der Schneidzähne, da die obere kurze Seite dieses "Trapezprofils" nicht exakt parallel zu der Unterseite verläuft, sondern um einen Winkel von z.B. 5-20° gegenüber der Unterseite des Trapezes, welche dem Gewindekemdurchmesser entspricht, geneigt ist.

Zur Herstellung entsprechender Gewinde wird zunächst ein Kemloch vorgebohrt, in welches dann ein entsprechender Gewindeschneider "eingeschraubt" wird. Dabei schneiden die Zähne im Anschnittbereich von einem Gewindegang zunächst nur den radial inneren Bereich und mit zunehmender Zahnhöhe in Richtung des Führungsteils schneiden die dann folgenden Zähne in diesen bereits vorgeschnittenen Gewindegängen zunehmend mehr Material heraus, bis schließlich die erforderliche Gewindetiefe bzw. Gewindeganghöhe erreicht ist.

Der anschließende Führungsteil sorgt im wesentlichen dafür, daß bei dem fortgesetzten Schneiden des Gewindes eine konstante Gewindeganghöhe und eine konstante Gewindesteigung sichergestellt wird, und daß auch die axiale Ausrichtung des Gewindeschneiders erhalten bleibt.

Die Zerspanungsleistung beim Schneiden der Gewinde wird demnach ausschließlich von den Schneidzähnen im Anschnittbereich erbracht.

Die Zähne im Anschnittbereich verschleißen daher relativ schnell, was ein entsprechend häufiges Nachschleifen der Zähne erfordert.

Gegenüber diesem Stand der Technik liegt der vorliegenden Erfindung die Aufgabe zugrunde, ein Gewindeschneidwerkzeug mit den eingangs genannten Merkmalen zu schaffen, welches einem geringeren Verschleiß unterliegt und weniger häufig nachgeschliffen werden muß als herkömmliche Gewindeschneidwerkzeuge der vorstehend beschriebenen Art.

Diese Aufgabe wird dadurch gelöst, daß mindestens ein Teil der Schneidzähne und vorzugsweise alle Schneidzähne im Anschnittbereich an ihren äußeren Ecken eine Fase bzw. Abschrägung oder eine Abrundung aufweisen. Dies bedeutet, daß das Zahnprofil in einem die Achse des Gewindeschneidwerkzeugs enthaltenden Längsschnitt abweichend von der näherungsweisen Trapezform an den oberen Ecken des Trapezes deutlich abgeschrägt bzw. abgerundet ist.

Die Breite einer solchen Fase bzw. der Radius der Abrundung dieser Eckbereiche sollte mindestens etwa ein Fünftel der äußeren Gewindegangbreite betragen. Unter "äußerer Gewindegangbreite" wird dabei die (in axialer Richtung) gemessene Breite des Gewindegangs an der Außenseite des Gewindes gemessen, was, bezogen auf das Trapezprofil der Zähne im Führungsteil der kurzen Seite dieses Trapezprofils entspricht. Bezogen auf die Gewindeganghöhe (axialer Abstand äquivalenter Punkte unmittelbar aufeinanderfolgender Gewindegänge) sollte die Breite der Fase bzw. der Radius der Abrundung mindestens etwa ein Fünfzigstel dieser Gewindeganghöhe bzw. Gewindesteigung (gleich axialer Vorschub bei einer Umdrehung des Gewindeschneidwerkzeugs bzw. einer entsprechenden Schraube) betragen.

Die maximale Breite der Fase bzw. der maximale Radius der Abrundung sollte das Fünf- bis Zehnfache der eben definierten minimalen Breite nicht übersteigen, d.h. konkret auf die äußere Gewindegangbreite bezogen, maximal etwa die Hälfte derselben betragen oder alternativ maximal ein Fünftel der Gewindesteigung (ausgedrückt in axialem Vorschub pro Umdrehungen).

Die Fasenfläche erstreckt sich vorzugsweise in konstanter Breite über die gesamte Umfangslänge eines Schneidzahns, wobei zur Erzeugung eines größeren Freiwinkels die Fasenbreite, ausgehend von der Schneidkante eines Schneidzahns, in Umfangsrichtung auch zunehmen kann.

Analoges gilt für eine Abrundung. Die Neigung der Fase relativ zu der angrenzenden Zahnflanke und dem angrenzenden Zahndach (gleich obere Trapezseite), ist vorzugsweise symmetrisch, d.h. die Fasenfläche schließt mit der angrenzenden Zahnflanke denselben Winkel ein wie mit dem angrenzenden Zahndach. Anders ausgedrückt verläuft die Fasenfläche senkrecht zu einer Winkelhalbierenden zwischen Zahnflanke und Zahndach.

Eine entsprechende Abrundung geht vorzugsweise glatt und ohne Knick in die angrenzende Zahnflanke und das angrenzende Zahndach über.

Die Zahl der Zähne im Anschnittbereich sollte für jeden Schneidstollen bei dem erfindungsgemäßen Gewindeschneidwerkzeug mindestens eins betragen, vorzugsweise bilden mindestens 2 bis 3 oder mehr Zähne den Anschnittbereich.

Die Zahl der Zähne im Anschnittbereich hängt allerdings auch von der Größe des Gewindes und insbesondere von der Gewindeganghöhe ab, um die Dicke der durch jeden der Zähne erzeugten Späne innerhalb bestimmter vorgegebener Grenzen zu halten.

Weitere Vorteile, Merkmale und Anwendungsbereiche der vorliegenden Erfindung werden deutlich anhand der folgenden Beschreibung einer bevorzugten Ausführungsform und der dazugehörigen Figuren. Es zeigen:
- Figur 1: ein Gewindeschneidwerkzeug in einer Seitenansicht,
- Figur 2: einen axialen Längsschnitt durch ein Gewindeschneidwerkzeug nach dem Stand der Technik in Eingriff mit einem schematisch angedeuteten Werkstück,
- Figur 3: eine analoge Ansicht zu Figur 2, jedoch nunmehr mit einem erfindungsgemäßen Gewindeschneidwerkzeug,
- Figur 4: eine schematische Darstellung eines einzelnen Schneidzahns gemäß der vorliegenden Erfindung,
- Figur 5: eine abgebrochene dreidimensionale Ansicht des Gewindeschneidwerkzeugs aus Figur 3
- Figur 6: eine Darstellung einer alternativen Schneidzahnform gemäß der vorliegenden Erfindung und
- Figur 7: eine weitere alternative Schneidzahnform mit abgerundeten Eckbereichen.

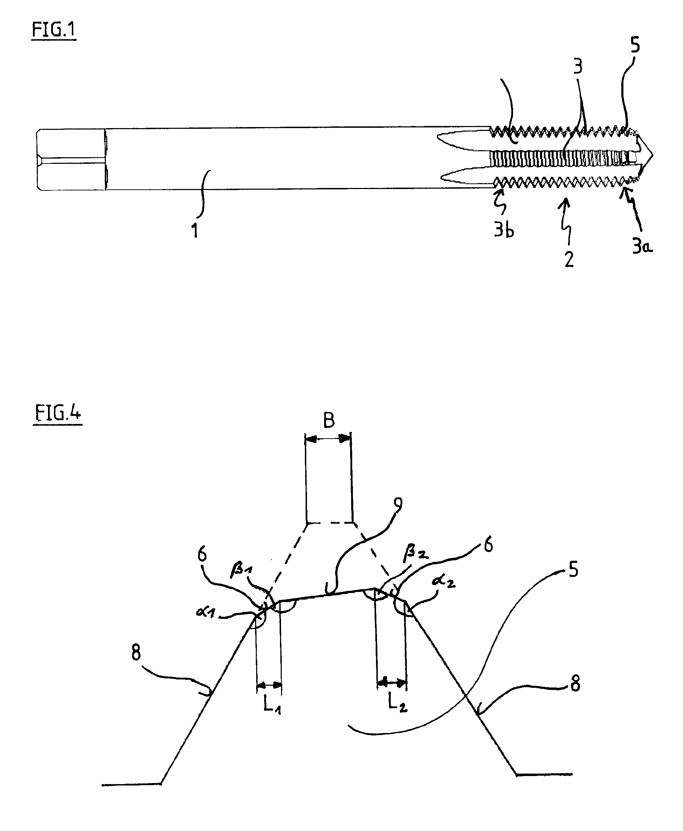

Man erkennt in Figur 1 ein Gewindeschneidwerkzeug, welches aus einem Schaft 1 und einem Schneidteil 2 besteht, wobei der Schneidteil wiederum aus mehreren Schneidstollen 3 und dazwischen angeordneten Spannuten besteht. In der hier dargestellten Ausführungsform verlaufen die Schneidstollen achsparallel und es sind z.B. drei oder vier Schneidstollen 3 entlang des Umfangs verteilt. Bei anderen Ausführungsformen könnten die Schneidstollen und Spannuten jedoch auch wendelförmig verlaufen. Jeder Schneidstollen 3 besteht wiederum aus einer an den Schaft 1 angrenzenden Gruppe von Schneidzähnen, die den sogenannten Führungsteil 3b bilden und aus vorderen Schneidzähnen 5, welche den sogenannten Anschnittbereich oder Anschnitt 3a bilden. Im Anschnittbereich verjüngt sich das Gewindeschneidwerkzeug zur Spitze hin, d.h. die einhüllende Fläche der Schneidzähne, die im Führungsteil ein Zylinder wäre, ist im Anschnittbereich konisch oder elliptisch zur Spitze hin verjüngt.

Die erfindungsgemäßen Merkmale sind in der Darstellung der Figur 1 nicht zu erkennen, sondern sind erst in der Vergrößerung gemäß Figur 3 sichtbar. Figur 2 entspricht einem axialen Längsschnitt durch einen Schneidstollen eines Gewindeschneidwerkzeugs, wie es in Figur 1 dargestellt ist, und zwar in Eingriff mit einem ebenfalls schematisch angedeuteten Werkstück. Das Werkstück 10 weist eine Kembohrung 11 auf, in die das Gewindeschneidwerkzeug abgesenkt und eingedreht wird. Dabei schneiden die einzelnen Zähne 12, 13 nacheinander zunehmend tiefere Bereiche des trapezförmigen Zahnprofils aus. In dem dargestellten Anschnittbereich ist das endgültige (jedoch noch nicht geschnittene) Gewindeprofil durch eine gestrichelte Linie angedeutet. Die noch zu schneidenden Bereiche 14 des Werkstücks 10 sind mit vertikalen Linien schraffiert.

Wie man erkennt, hat jeder einzelne der Schneidzähne 12, 13 näherungsweise ein Trapezprofil, wobei die Höhe des Trapezes von der Spitze in Richtung des Führungsteils immer weiter zunimmt, bis schließlich das volle Profil eines Gewindegangs erreicht ist, wie es die Zähne 12 im Führungsteil haben. Eine gewisse Abweichung vom Trapezprofil tritt nur deshalb auf, weil sich der Radius des Schneidwerkzeugs im Anschnittbereich vom Führungsteil bis zur Spitze des Werkzeugs hin verjüngt und weil diese Form sich am besten durch Schleifen entlang einer z. B. konischen oder elliptischen Hüllfläche herstellen läßt. Ebensogut wäre es aber auch möglich, jedem einzelnen der Zähne im Anschnittbereich ein exaktes Trapezprofil zu geben und die Höhe dieses Trapezprofils stufenweise von Zahn zu Zahn anwachsen zu lassen (von der Spitze zum Führungsteil hin).

Figur 3 zeigt einen ähnlichen Axialschnitt wie Figur 2, nunmehr jedoch für das erfindungsgemäße Zahnprofil. Wie man sieht, weichen in diesem Fall die Zähne 5 im Anschnittbereich 3a in ihrer Profilform von der erwähnten Trapezform insofern etwas ab, als die oberen äußeren Ecken der Trapezprofile eine Abschrägung 6 aufweisen, die in der Fachsprache auch Fase genannt wird. Auch hier ist das endgültig herzustellende Gewindeprofil wieder gestrichelt eingezeichnet bzw. das zu schneidende Material 14 des Werkstücks 10 vertikal schraffiert und der jeweils beschnittene Profilbereich entspricht dem Profil der einzelnen Zähne.

Figur 4 zeigt einen der Zähne 5 im Anschnittbereich vergrößert im Querschnitt. Die axiale Länge der beiden Fasen 6 ist dabei mit L1 bzw. L2 angegeben. Bezogen auf die Breite B des Gewindegangs am äußersten Umfang des Gewindes, die in Figur 4 ebenfalls eingezeichnet ist, sollten die axialen Maße der Fasen bzw. Abschrägungen 6 nicht mehr als die Hälfte betragen. Dabei sollte die Fasenfläche mit der angrenzenden Zahnflanke 8 und dem Zahndach 9 jeweils in etwa denselben Winkel einschließen, d.h. die eingezeichneten Winkel α1 und β1 sind näherungsweise ebenso gleich wie auch die Winkel α2 und β2 (die sich aber wiederum von α1 und β1 unterscheiden, da das Zahndach 9 zur Achse des Werkzeugs geneigt verläuft).

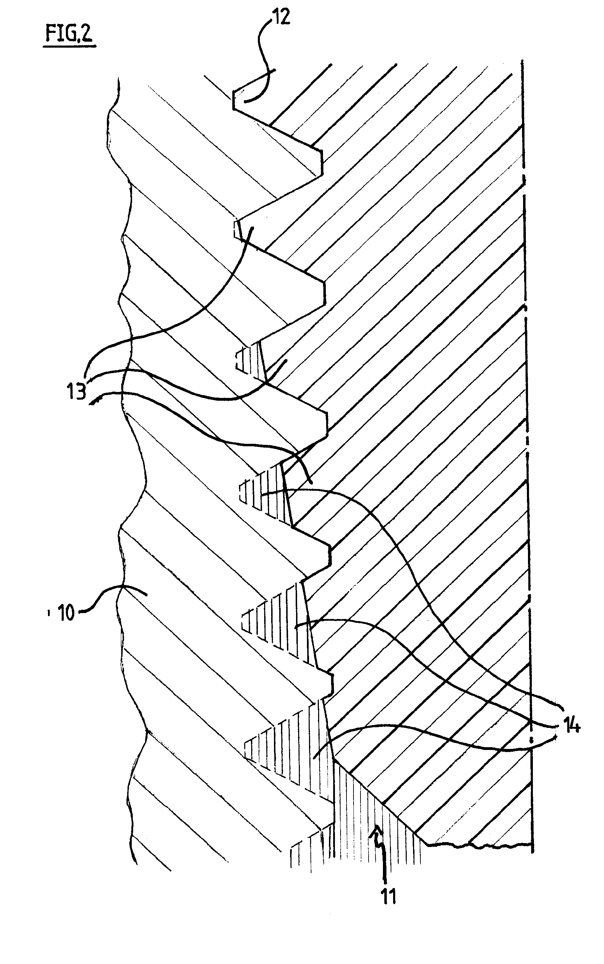

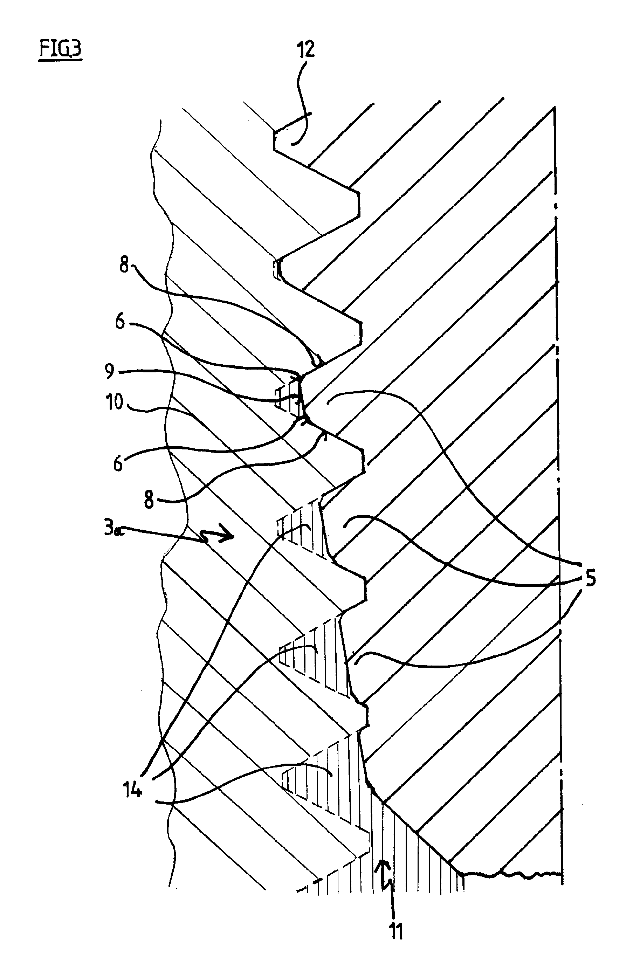

In Figur 5 ist eine abgebrochene dreidimensionale Ansicht der in den Figuren 3 und 4 gezeigten Ausführungsform des Gewindeschneidwerkzeugs dargestellt. Deutlich ist der Verlauf der Fasen 6 entlang des Umfangs der im Bereich des Anschnitts 3a liegenden Schneidzähne 5 zu erkennen. Zwischen den vier über den Umfang des Werkzeugs verteilt angeordneten Schneidstollen 3 sind die vier Spannuten 16 zu erkennen, welche in der dargestellten Ausführungsform einen zur Drehachse parallelen Verlauf aufweisen.

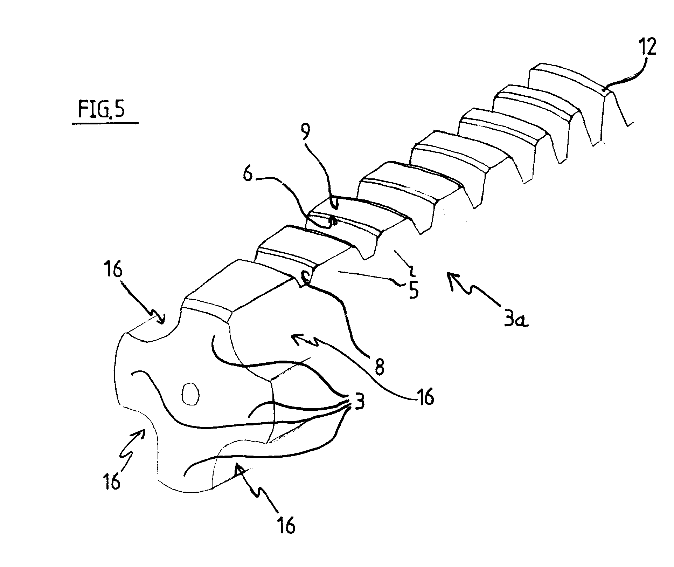

Figur 6 zeigt eine Variante, bei welcher die einzelnen Zähne 5' im Anschnittbereich stufenweise verjüngt sind, d.h. jeder einzelne Zahn hat eine achsparallele Dachfläche 9'. Für die axiale Länge L₁, L₂ der Fasen 6' gilt das gleiche wie im Falle des Ausführungsbeispiels der Figur 4. Die hier nicht eingezeichneten 4 Winkel α1, β1, α2 und β2 wären in diesem Fall, jedenfalls in der bevorzugten Ausführungsform der Erfindung, allesamt identisch.

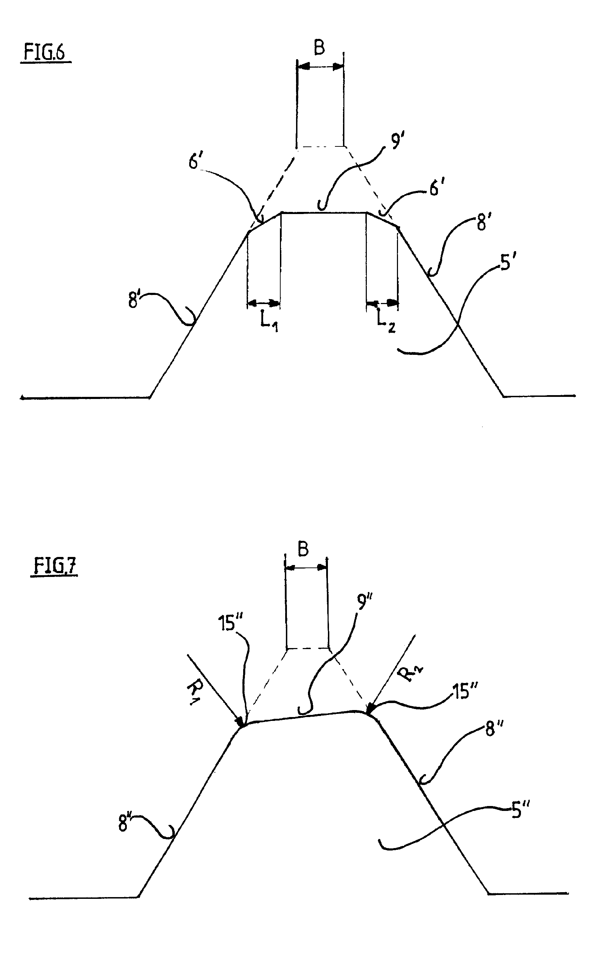

Figur 7 zeigt schließlich ein Zahnprofil, bei welchem anstelle einer Fase bzw. Abschrägung eine Abrundung 15" vorgenommen wurde. Die Rundungsradien R1, R2 sind vorzugsweise gleich oder zumindest in derselben Größenordnung und der Betrag der Radien R1, R2 beträgt vorzugsweise nicht mehr als die Hälfte des Maßes B. Dieses Maß B, d.h. die in axialer Richtung gemessene Breite des Gewindegangs am äußersten Umfang des Gewindes, beträgt wiederum im Vergleich zur Gewindesteigung, ausgedrückt in dem axialen Abstand äquivalenter Punkte zweier aufeinanderfolgender Gewindegangabschnitte, etwa ein Fünftel bis ein Zehntel. Demzufolge kann die maximale axiale Länge der Fase bzw. der maximale Radius der Abrundung auch auf diese Gewindesteigung bezogen werden und beträgt dann maximal ein Zehntel der Gewindesteigung.

Der minimale Betrag der axialen Länge der Fasen bzw. der Radien der Abrundungen sollte etwa ein Fünftel der maximalen Maße betragen, beträgt also auf die Gewindesteigung bezogen etwa ein Fünfzigstel und bezogen auf die äußere axiale Breite des Gewindegangs etwa ein Zehntel.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Gewindeschneidwerkzeug mit einem Schaft (1) und einem Schneidteil (2), wobei das Schneidteil (2) mehrere Schneidstollen (3) mit dazwischenliegenden Spannuten (4) aufweist und wobei die Schneidstollen (3) einen vorderen, verjüngt zulaufenden Anschnittbereich (3a) und einen daran anschließenden Führungsteil (3b) aufweisen, **dadurch gekennzeichnet, daß** die Schneidzähne (5) im Anschnittbereich an ihren Ecken eine Fase (6) oder Abrundung (7) aufweisen.

2. Gewindeschneidwerkzeug nach Anspruch 1, **dadurch gekennzeichnet, daß** die Breite (b) der Fase oder der Radius (r) der Abrundung maximal die Hälfte der äußeren Gewindegangbreite beträgt.

3. Gewindeschneider nach Anspruch 1 oder 2, **dadurch gekennzeichnet, daß** die Breite (b) der Fase bzw. der Radius (r) der Abrundung mindestens ein Fünftel der äußeren Gewindegangbreite beträgt.

4. Gewindeschneidwerkzeug nach einem der Ansprüche 1 bis 3, **dadurch gekennzeichnet, daß** die Fasenfläche senkrecht zur Winkelhalbierenden zwischen Zahnflanke und Zahndach verläuft.

5. Gewindeschneidwerkzeug nach einem der Ansprüche 1 bis 3, **dadurch gekennzeichnet, daß** die Abrundung jeweils glatt in die Zahnflanke und das Zahndach übergeht.

6. Gewindeschneidwerkzeug nach einem der Ansprüche 1 bis 5, **dadurch gekennzeichnet, daß** der mit einer Fase oder Abrundung versehene Anschnittbereich sich über mindestens einen, vorzugsweise mindestens zwei oder drei aufeinanderfolgende Zähne erstreckt.

7. Gewindeschneidwerkzeug nach einem der Ansprüche 1 bis 6, **dadurch gekennzeichnet, daß** das Zahndach (9) der Schneidzähne (5) im Anschnittbereich (3a) auf die Achse des Schneidwerkzeugs bezogen eine Neigung zwischen 3° und 20° aufweist.

8. Gewindeschneidwerkzeug nach einem der Ansprüche 1 bis 6, **dadurch gekennzeichnet, daß** das Zahndach (9) der Schneidzähne (5) im Anschnittbereich parallel bzw. konzentrisch zur Achse verläuft.
